# EUROPÄISCHE PATENTSCHRIFT

(11) **EP 4 042 501 B1**
(45) Veröffentlichungstag und Bekanntmachung des Hinweises auf die Patenterteilung: **13.09.2023**
(21) Anmeldenummer: 20790227.1
(22) Anmeldetag: 08.10.2020
(51) Int. Cl.: H01M 4/62

(54) **VERWENDUNG EINES VERBUNDMATERIALS ZUR AUFNAHME UND VERTEILUNG VON FLÜSSIGKEITEN IN AKTIV UND/ODER PASSIV GEKÜHLTEN STROMFÜHRENDEN SYSTEMEN**
USE OF A COMPOSITE MATERIAL FOR ABSORBING AND DISTRIBUTING LIQUIDS IN ACTIVELY AND/OR PASSIVELY COOLED CURRENT-CARRYING SYSTEMS
UTILISATION D'UN MATÉRIAU COMPOSITE SERVANT À ABSORBER ET DISTRIBUER DES LIQUIDES DANS DES SYSTÈMES DE TRANSPORT DE COURANT REFROIDIS ACTIVEMENT ET/OU PASSIVEMENT

(30) Priorität: 09.10.2019 DE 102019127180
(43) Veröffentlichungstag der Anmeldung: 17.08.2022
(73) Patentinhaber: Carl Freudenberg KG, 69469 Weinheim (DE)
(72) Erfinder: SCHNEIDER, Ulrich, 64297 Darmstadt (DE); SENNE, Sarah, 68542 Heddesheim (DE); KRITZER, Peter, 67147 Forst (DE)
(86) Internationale Anmeldenummer: PCT/EP2020/078201
(87) Internationale Veröffentlichungsnummer: WO 2021/069539

(56) Entgegenhaltungen:
- DE-A1-102010 022 327
- DE-A1-102017 004 296

## Beschreibung

Die Erfindung betrifft die Verwendung eines Verbundmaterials zur Aufnahme und Verteilung von Flüssigkeiten in aktiv und/oder passiv gekühlten stromführenden Systemen, insbesondere in aktiv und/oder passiv gekühlten Stromspeichersystemen. Die Erfindung betrifft ferner ein Absorberpad und ein aktiv und/oder passiv gekühltes stromführendes System, die das Verbundmaterial enthalten.

Stromführende Systeme insbesondere Batteriesysteme gewinnen zunehmend an Bedeutung, da sie für den Antrieb von Elektro- und Hybridfahrzeugen benötigt werden. Ein "stromführendes System" ist bekanntermaßen ein System, durch das elektrischer Strom fließt. Praktisch relevante stromführende Systeme sind "Stromspeichersysteme", also Systeme zur Speicherung von momentan verfügbarer, aber nicht benötigter Energie zur späteren Nutzung. Diese Speicherung geht häufig mit einer Wandlung der Energieform einher, beispielsweise von elektrischer in chemische Energie. Im Bedarfsfall wird die Energie dann in die gewünschte elektrische Form zurückgewandelt. Batteriesysteme sind bekanntermaßen in Serie oder parallel geschaltete Module, die in Serie oder parallel geschaltete Sekundär- oder Primärzellen enthalten. Weitere stromspeichernde Systeme sind Akkumulatoren, also in Serie oder parallel geschaltete Module, die in Serie oder parallel geschaltete Sekundärzellen enthalten. Ebenfalls praktisch relevante stromspeichernde Systeme sind Kondensatoren, also passive elektrische Bauelemente mit der Fähigkeit, in einem Gleichstromkreis elektrische Ladung und die damit zusammenhängende Energie statisch in einem elektrischen Feld zu speichern.

Um eine optimale Funktion der Systeme zu gewährleisten, ist es notwendig die Temperatur der Batteriezellen in einem gewünschten Temperaturbereich zu halten. Um Überschreitungen und/oder Unterschreitungen der Betriebstemperatur zu verhindern, werden aktive oder passive Temperiersysteme eingesetzt. Besonders bewährt hat sich der Einsatz von flüssigem Temperiermittel mit einer hohen Wärmekapazität, das gut wärmeleitend, in einem Wärmetauscher, an den Batteriezellen entlanggeführt wird.

Darüber hinaus sind die Systeme in der Regel gegenüber der Umgebung nicht hermetisch abgeschlossen. Das heißt, sie lassen einen Gasaustausch mit der Umgebung zu. Um Kontaminations-Eindringung zu verhindern, wird die eintretende Luft gefiltert. Hierzu werden z.B. mikroporöse Folien oder Vliesstoffe eingesetzt.

All diese Ansätze erlauben zwar eine Filterung von Partikeln, nicht jedoch von Gasen und insbesondere auch nicht von Wasserdampf. Wasserdampf kann somit durch die Folien hindurch in das elektronische Gehäuse gelangen. Da das Innere des Gehäuses allerdings gekühlt wird, kann Wasser an kalten Stellen im Gehäuse kondensieren (wenn dessen Taupunkt überschritten wird). Da insbesondere stromführende Teile gekühlt werden, findet die Kondensatbildung dort statt, wo es am kritischsten ist.

Wenn darüber hinaus die Temperatur im Gehäuse selbst immer auf einem niedrigen Niveau liegt, kann das gebildete Kondensat nur schwierig wieder aus dem Gehäuse entfernt werden. Denkbar wären hier z.B. Pumpen, gesteuerte Ventile oder ein Ausheizen. Diese Ansätze sind aufwendig, ggf. fehleranfällig. Ein Ausheizen verbietet sich darüber hinaus bei vielen Applikationen (z.B. Batteriesystemen).

Ein probates Mittel zur Wasseraufnahme stellen Trockenmittel dar, die im oder vor dem Gehäuse angebracht sind, und die Wasser irreversibel binden. Nachteilig hierbei ist allerdings, dass solche Mittel nicht nur flüssiges Wasser aufnehmen, sondern auch Wasserdampf. Sind die Mittel in einem Gehäuse platziert, entfeuchten sie auch den Gasraum im Gehäuse. Dies hat zur Folge, dass somit auch Wasserdampf in das Gehäuse gezogen wird, welcher unter normalen Umständen gar nicht ins Gehäuse gelangt wäre. Somit fungieren solche Trockenpatronen nicht nur als Feuchteaufnehmer sondern auch als Feuchtesauger.

Problematisch ist ferner, dass es, beispielsweise bei einem Unfall eines derart ausgestatteten Fahrzeuges, zu Leckagen und dadurch zum Austreten des Temperiermittels aus dem Kühlkörper kommen kann. Das Temperiermittel kann dann in direkten Kontakt mit den Batteriezellen gelangen und durch seine Leitfähigkeit beispielsweise einen Kurzschluss auslösen.

Ein übliches Trockenmittel ist P₂O₅. Dieses hat zwar eine extrem hohe Aufnahmekapazität gegenüber Wasser, bildet aber bei Aufnahme von Wasser flüssige Phosphorsäure. Diese kann zur Korrosion führen und stellt aufgrund ihrer elektrischen Leitfähigkeit ein Risiko für elektrische Applikationen dar. Zusätzlich ist die Wasseraufnahme irreversibel. Ähnlich reagieren andere typische Trockenmittel wie CaCl₂.

Aus diesem Grund sind die vorgenannten Trockenmittel technisch nicht zielführend. Üblicherweise werden die Trockenmittel in Beuteln lose eingeschweißt (Desiccant Bags) und sind hierdurch nicht verlässlich fixiert.

Weitere bekannte Flüssigkeits- und insbesondere wasseraufnehmende Substanzen sind z.B. Superabsorber. Vorteilhaft an Superabsorbern ist, dass sie einerseits eine sehr hohe Wasseraufnahmekapazität haben, chemisch neutral reagieren (auch gegenüber organischen Lösemitteln) und außerdem reversibel beladen werden können.

Superabsorber führen mit polaren flüssigen Medien zu einer starken Quellung, und ggf. zu einer Gelbildung. Insbesondere die Quellung kann dazu führen, dass Transportkanäle der Flüssigkeit durch den Quellvorgang blockiert werden (sog. Blocking Effekt) und eine nachfolgende Aufnahme nicht mehr möglich ist. Darüber hinaus ist eine Quellung in elektronischen Geräten aus zwei weiteren Gesichtspunkten unvorteilhaft bzw. schädlich: Zum einen kann das gequollene Material mechanische Drücke aufbauen, durch welche z.B. elektrische Kontakte getrennt werden können. Zum anderen kann das gequollene Material bei unkontrollierter Quellung elektrische Kurzschlüsse verursachen, wenn es mit stromführenden Teilen in Kontakt kommt.

Liegen die Superabsorber in loser Form vor, ist einerseits potentielle Staubbildung im trockenen Zustand problematisch, andererseits ist auch die Entnahme im gequollenen Zustand nicht einfach, da gequollene Superabsorberpartikel mechanisch nicht stabil sind. Dies führt zu Problemen in der Reparatur und/oder im Instandsetzungsfall.

Superabsorber-Materialien sind z.B. aus medizinischen Produkten bekannt und beispielsweise in der DE102006031418A1 beschrieben.

EP2731164 (A1) beschreibt ein Batteriesystem umfassend Batteriezellen, zumindest ein Absorptionselement und ein Temperiersystem mit einem flüssigen Temperiermittel zur Kühlung und/oder Beheizung der Batteriezellen in einem Batteriegehäuse. Das Absorptionselement zur Aufnahme des flüssigen Temperiermittels ist zwischen den Batteriezellen und dem Batteriegehäuse angeordnet, wobei das Absorptionselement ein Vlies ist, wobei das Vlies eine durchschnittliche flächenbezogene Masse von 250 bis 700 g/m² aufweist und Fasern von zumindest zwei unterschiedlichen Fasertypen umfasst, wobei zumindest einer der Fasertypen eine Stützfaser ist und zumindest ein weiterer der Fasertypen eine Absorptionsfaser ist.

Nachteilig an der Verwendung von Absorptionsfasern ist, dass diese in der Regel ein geringeres Absorptionsvermögen haben als vergleichbare absorbierende Partikel. Darüber hinaus besitzen sie in der Regel eine geringere thermische Stabilität im trockenen wie auch im gequollenen Zustand. Darüber hinaus kann die Verwendung von absorbierenden Fasern, wie oben erläutert, zu einem Gelblocking-Effekt führen.

Aus der DE 10 2010 022 327 A1 ist eine Vorrichtung zur Einstellung von im Wesentlichen konstanten Umgebungsbedingungen für ein elektrisches Bauteil, das stromführend und/oder stromspeichernd ausgebildet ist, bekannt. Dabei ist das elektrische Bauteil von einem Gehäuse umgeben, das eine Öffnung ausgebildet hat, um somit eine Verbindung zur äußeren Umgebung des Gehäuses zu erhalten. Um den Eintritt von Feuchtigkeit zu verhindern, kann ein Feuchtigkeit absorbierendes Element verwendet werden. Als Feuchtigkeit absorbierendes Element werden Superabsorber genannt.

Die DE 10 2017 004 296 A1 beschreibt eine Hochvoltkomponente für ein Kraftfahrzeug, mit einem Gehäuse, in welchem wenigstens ein eine elektrische Spannung bereitstellendes und/oder im Betrieb mit elektrischer Spannung beaufschlagtes Element angeordnet ist, und mit einer Sensoreinrichtung zum Erfassen einer Beeinträchtigung der Hochvoltkomponente. Die Sensoreinrichtung weist eine zum Aufnehmen einer Flüssigkeit ausgebildete Schicht und einen an eine Messeinrichtung der Sensoreinrichtung angeschlossenen elektrischen Leiter auf. Die Messeinrichtung ist dazu ausgebildet, in Abhängigkeit von einem Vorhandensein von Flüssigkeit in der Schicht eine Veränderung eines elektrischen Widerstands der Schicht zu erfassen.

Aufgabe der Erfindung ist es die vorgenannten Nachteile zumindest teilweise auszuräumen. Insbesondere soll ein Material bereitgestellt werden, das eine gute Wasseraufnahme und Retention hat. Das Material soll ferner in der Lage sein Wasser und ggf. Wasserdampf reversibel zu binden. Darüber hinaus soll es eine kontrollierte Quellbarkeit aufweisen und ein Blocking Effekt vermieden werden können. Schließlich soll es staubarm einsetzbar sein.

Diese Aufgabe wird gelöst durch die Verwendung eines Verbundmaterials, umfassend eine Trägerlage und eine auf der Trägerlage fixierte Flüssigkeitsaufnahmelage, wobei die Flüssigkeitsaufnahmelage fixierte superabsorbierende Partikel enthält, wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt, zur Aufnahme und Verteilung von Flüssigkeiten in aktiv und/oder passiv gekühlten stromführenden Systemen, insbesondere in aktiv und/oder passiv gekühlten Stromspeichersystemen.

Erfindungsgemäß wurde gefunden, dass sich das oben beschriebene Verbundmaterial hervorragend zur Aufnahme und Verteilung von Flüssigkeiten in aktiv und/oder passiv gekühlten stromführenden Systemen eignet, da durch die Fixierung der superabsorbierenden Partikel die Gefahr der Staubbildung signifikant verringert wird. Die superabsorbierenden Partikel sind vorzugweise an der Trägerlage fixiert, beispielsweise mittels Binder. Dies ist insbesondere bei mechanischer Belastung, wie sie beispielsweise beim Einsatz des Verbundmaterials im Automobil auftritt, von Vorteil. Darüber hinaus ermöglicht es die Fixierung Superabsorber in Partikelform zu verwenden. Diese haben gegenüber Superabsorber-Fasern den Vorteil, dass sie eine höhere Absorptionskapazität bei vergleichbarer thermischer Stabilität sowohl im getrockneten wie auch im gequollenen Zustand haben. Darüber hinaus wurde überraschend gefunden, dass fixierte superabsorbierende Partikel eine schnellere Wasserdampfaufnahme kombiniert mit einer vollständigeren Wasserdampfabgabe als lose superabsorbierende Partikel ermöglichen. Außerdem zeigt das Verbundmaterial einen sehr geringen Gelblocking-Effekt, da die verwendete Flüssigkeitsverteilungslage die aufzunehmende Flüssigkeit in der Ebene des Verbundmaterials aufnimmt und verteilt. Hierdurch kann die Aufnahmekapazität der Flüssigkeitsaufnahmelage optimal ausgenutzt werden.

Erfindungsgemäß eignet sich das Verbundmaterial für die verschiedensten aktiv und/oder passiv gekühlten stromführenden Systeme, beispielsweise Batteriesysteme, Inverter / Leistungselektronik-Systeme und/oder Ladestationen. Es können dabei die verschiedensten Flüssigkeiten aufgenommen werden, beispielsweise Wasser und/oder andere Kühlmedien, wie beispielsweise Wasser-Glykol-Gemische.

Erfindungsgemäß bevorzugte stromführende Systeme sind stromführende Systeme, ausgewählt aus einem Stromspeichersystem, einem stromführenden Energiewandler, einem Transformator, einem Leistungselektroniksystem, einem Steuerungselektroniksystem, insbesondere einem Prozessor gesteuerten System, einer Ladestation, einem Wechselrichter, einem Gleichrichter, einem Elektrolyseur und/oder Kombinationen hiervon.

Bevorzugte Stromspeichersysteme sind erfindungsgemäß Batteriesysteme, Kondensatoren und/oder Akkumulatoren. Ganz besonders bevorzugt sind Batteriesysteme.

Superabsorber zeichnen sich dadurch aus, dass sie Flüssigkeit hervorragend binden und aufnehmen können. Erfindungsgemäß wird unter einem Superabsorber ein Polymer verstanden, das in der Lage ist, ein Vielfaches seines Eigengewichts - bis zum 500-fachen - an Flüssigkeiten, vorzugsweise Wasser, aufzusaugen bzw. aufzunehmen, wobei es an Volumen zunimmt.

Superabsorber bilden im gequollenen Zustand Hydrogele. Geeignete Superabsorber sind insbesondere vernetzte Polymere, die polar sind. Besonders bevorzugt sind Polyacrylamid, Polyvinylpyrrolidon, Amylopektin, Gelatine, Cellulose. Ganz besonders bevorzugt sind Copolymere aus Acrylsäure (Propensäure, H2C=CH-COOH) und / oder Natriumacrylat (Natriumsalz der Acrylsäure, H2C=CH-COONa) einerseits und Acrylamid andererseits. Dabei kann das Verhältnis der beiden Monomere zueinander variieren.

Den vorgenannten Monomeren wird in der Regel ein so genannter Kernvernetzer (Core-Cross-Linker, CXL) zugesetzt, der die gebildeten langkettigen Polymermoleküle stellenweise untereinander durch chemische Brücken verbindet (vernetzt). Durch diese Brücken wird das Polymer wasserunlöslich. Zusätzlich kann ein sogenannter Oberflächen-Nachvernetzer, (Surface-Cross-Linker, SXL) verwendet werden. Dabei wird eine weitere Chemikalie auf die Oberfläche der Partikel aufgebracht, die durch Erwärmung ein zweites Netzwerk nur auf der äußeren Schicht des Korns knüpft. Diese Hülle stützt das aufgequollene Gel, um dieses auch bei äußerer Belastung (Bewegung, Druck) zusammen zu halten.

In einer bevorzugten Ausführungsform der Erfindung sind die superabsorbierenden Partikel auf der Trägerlage mit einem Bindemittel, insbesondere mit einem wasserlöslichen Bindemittel, wie zum Beispiel Polyvinylalkohol, Stärke, Polyvinylpyrolidon, Caseinleim, Polyvinylbutyral und/oder mit einem wasserquellbaren Bindemittel, wie zum Beispiel zumindest teilweise vernetztem Polyvinylalkohol und/oder teilweise vernetzter Stärke fixiert. Unter einem wasserlöslichen Bindemittel sind Bindemittel mit einer Wasserlöslichkeit von mindestens 1 g/l, beispielsweise 1 g/l bis 400 g/l noch bevorzugter von 2 g/l bis 350 g/l und insbesondere von 5 g/l bis 300 g/l, gemessen jeweils bei 23°C, zu verstehen. Vorteilhaft an der Verwendung von wasserlöslichen Bindemitteln und/oder wasserquellbaren Bindemitteln ist, dass die freie Quellbarkeit des Superabsorbers nicht eingeschränkt wird.

Vorzugsweise beträgt der Anteil des wasserlöslichen Bindemittels und/oder wasserquellbaren Bindemittels, bezogen auf die Gesamtmenge an Bindemittel, mindestens 70 Gew.%. beispielsweise 70 Gew.% bis 100 Gew.% noch bevorzugter von 80 Gew. % bis 100 Gew. % und insbesondere von 90 Gew.% bis 100 Gew.%.

In einer weiteren bevorzugten Ausführungsform weisen die superabsorbierenden Partikel ein Quellverzögerungsmittel auf. Hieran ist vorteilhaft, dass die Quellung der superabsorbierenden Partikel verzögert werden kann, wodurch die Verteilung der aufzunehmenden Flüssigkeit optimiert und die Aufnahmefläche der Flüssigkeitsaufnahmelage besonders gut ausgenutzt werden kann. Das Quellverzögerungsmittel kann aus den gleichen Materialien wie das wasserlösliche und/oder quellbare Bindemittel bestehen. Vorzugsweise sind die superabsorbierenden Partikel von dem Quellverzögerungsmittel zumindest teilweise, vorzugsweise vollständig ummantelt.

Die Flüssigkeitsverteilungslage nimmt eine aufzunehmende Flüssigkeit auf und verteilt diese in der Ebene des Verbundmaterials.

In einer weiteren bevorzugten Ausführungsform umfasst die Flüssigkeitsverteilungslage einen Vliesstoff, ein Gewebe, ein Gewirke, einen offenporigen Schaum und/oder ein Bindemittel, vorzugsweise ein wasserlösliches und/oder wasserquellbares Bindemittel. Bevorzugte wasserlösliche Bindemittel sind Polyvinylalkohol, Stärke, Polyvinylpyrolidon, Caseinleim, Polyvinylbutyral. Bevorzugte wasserquellbare Bindemittel sind zum Beispiel zumindest teilweise vernetzter Polyvinylalkohol und/oder teilweise vernetzte Stärke. Vorteilhaft an diesen Materialien ist ihre gute Wasserdurchlässigkeit gepaart mit einer hohen strukturellen Integrität auch im nassen Zustand. Bevorzugte Vliesstoffe sind Spinnvliesstoffe, nass gelegte Vliesstoffe und/oder trocken gelegte Vliesstoffe. Das Flächengewicht beträgt vorzugsweise 10 g/m² bis 500 g/m².

In einer weiteren bevorzugten Ausführungsform ist die Oberflächenenergie der Flüssigkeitsverteilungslage, gemessen nach DIN 55660, größer als 30 mN/m , vorzugsweise größer als 35 mN/m und besonders bevorzugt größer als 40 mN/m. Hieran ist vorteilhaft, dass polare Medien wie Wasser oder Wasser/Glycol Mischungen, besonders gut verteilt werden können.

In einer weiteren bevorzugten Ausführungsform umfasst die Flüssigkeitsverteilungslage mindestens zwei Verteilungsschichten, wobei mindestens eine Verteilungsschicht wasserlöslich ist und mindestens eine andere Verteilungsschicht nicht wasserlöslich ist. Die wasserlösliche Verteilungsschicht kann aus den gleichen Materialien wie das für die superabsorbierenden Partikel verwendete wasserlösliche und/oder quellbare Bindemittel bestehen. Die wasserunlösliche Verteilungsschicht enthält vorzugsweise thermoplastische Polymere, besondere mit einem Schmelzpunkt von unter 260°C. Besonders bevorzugte Polymere sind Polyester, Copolyester, Polyamide, Copolyamide, Polyolefine und/oder Blends hiervon. Hieran ist vorteilhaft, dass diese zum thermischen Verschweißen verwendet werden können.

In einer weiteren bevorzugten Ausführungsform liegt die Luftdurchlässigkeit der Flüssigkeitsverteilungslage bei mehr als 10 dm³/(m²s), bevorzugt im Bereich von 20 bis 3000 dm³/(m²s), noch bevorzugter von 30 bis 2000 dm³/(m²s), besonders bevorzugt im Bereich von 30 bis 1000 dm³/(m²s). Dabei wird die Luftdurchlässigkeit gemessen nach DIN EN ISO 9237 bei einem Differenzdruck von 100 Pa. Die Messungen der Luftdurchlässigkeit erfolgen vor der Kontaktaufnahme mit Flüssigkeit mit Proben einer Dicke von 0,05 bis 10 mm, vorzugsweise 3 mm, einer luftdurchströmten Probenfläche von 20 cm², bei einer Luftdruckdifferenz von 100 Pa.

In einer bevorzugten Ausführungsform der Erfindung weist die Verteilungslage, insbesondere die wasserunlösliche Wasserverteilungslage eine mittlere Porengröße von mehr als 1 µm, beispielsweise von 1 µm bis 1000 µm, bevorzugt von 10 bis 800 µm auf.

In einer weiteren bevorzugten Ausführungsform der Erfindung weist die Verteilungslage Mikrofasern, vorzugweise mit einem Titer von weniger als 1 dtex, beispielweise von 0,01 bis 1 dtex, noch bevorzugter von 0,01 bis 0,9 dtex auf. Hieran ist vorteilhaft, dass die Mikrofasern eine besonders hohe Kapillarität und hierdurch eine besonders gute Verteilung von Flüssigkeiten in der Verteilungslage ermöglichen.

In einer weiteren bevorzugten Ausführungsform der Erfindung weist das Verbundmaterial eine Flüssigkeitsaufnahmemenge (VE-Wasser) von mindestens 2 l/m², beispielsweise von 2 l/m² bis 200 l/m², noch bevorzugter von 3 l/m² bis 200 l/m², noch bevorzugter von 5 l/m² bis 200 l/m², noch bevorzugter von 10 l/m² bis 200 l/m² und insbesondere von 20 l/m² bis 200 l/m² auf.

Die Trägerlage enthält vorzugsweise thermoplastische Polymere, besonders mit einem Schmelzpunkt von unter 270°C. Besonders bevorzugte Polymere sind Polyester, Copolyester, Polyamide, Copolyamide, Polyolefine und/oder Blends hiervon. Hieran ist vorteilhaft, dass die sie zum thermischen Verschweißen verwendet werden können.

Vorzugsweise umfasst die Trägerlage einen Vliesstoff, ein Gewebe, ein Gewirke, und/oder einen offenporigen Schaum. Bevorzugte Vliesstoffe sind Spinnvliesstoffe, nass gelegte Vliesstoffe und/oder trocken gelegte Vliesstoffe. Das Flächengewicht beträgt vorzugsweise 10 g/m² bis 500 g/m².

In einer weiteren bevorzugten Ausführungsform ist das Verbundmaterial komprimierbar und kann hierdurch gut in aktiv und/oder passiv gekühlten stromführenden Systemen, insbesondere in aktiv und/oder passiv gekühlten Stromspeichersystemen fixiert werden. Außerdem kann so ein guter Kontakt zu angrenzenden Bauteilen sicher gestellt werden.

In einer weiteren bevorzugten Ausführungsform der Erfindung weist das Verbundmaterial eine wasserunlösliche Flüssigkeitsverteilungslage, die thermoplastische Polymere enthält, auf und eine Trägerlage, die ebenfalls thermoplastische Polymere enthält. Hieran ist vorteilhaft, dass die wasserunlösliche Flüssigkeitsverteilungslage und die Trägerlage besonders gut miteinander verschweißt verwendet werden können. Deshalb sind vorzugsweise die Trägerlage und die Flüssigkeitsverteilungslage miteinander verschweißt und/oder verschweißbar. Vorteilhaft hieran ist, dass die flüssigkeitsaufnehmende Lage hinsichtlich ihrer Ausdehnung in Höhenrichtung bei Flüssigkeitsaufnahme eingeschränkt werden kann.

Überraschend wurde gefunden, dass das erfindungsgemäße Verbundmaterial gute Schallabsorptionseigenschaften hat. So weist das Verbundmaterial in einer weiteren Ausführungsform der Erfindung einen Absortionskoeffizienten gemessen nach EN ISO 354:2003 bei einer Frequenz von 6300 Hz von mehr als 0,09 auf, noch bevorzugter von mehr als 0,2 und besonders bevorzugt von mehr als 0,25 und/oder bei einer Frequenz von 8000 Hz von mehr als 0,1 noch bevorzugter von mehr als 0,25 und besonders bevorzugt von mehr als 0,3 auf. Dies war überreaschend, weil davon auszugehen war, dass die Beschichtung mit den superabsorbierenden Partikeln zu einem Verbundmaterial mit geringer Luftdurchlässigkeit und damit verbunden einem niedrigen Absortionskoeffizienten führen sollte.

Das Verbundmaterial kann in einem wasserdurchlässigen Beutel, der am Rande verschweißt ist, vorliegen. Es können auch mehrere Verbundmaterialien in dem Beutel angeordnet sein.

Das Verbundmaterial kann in dem Beutel auf verschiedene Weise angeordnet sein. Liegt das Verbundmaterial in Form von Absorberpads vor, so können diese aufeinander gestapelt im Beutel vorliegen. Liegt das Verbundmaterial als Bahnenware vor, so kann diese zieharmonikaartig gefaltet und/oder zusammengerollt und flachgedrückt im Beutel vorliegen.

In einer weiteren Ausführungsform liegt mindestens ein Verbundmaterial als Absorberpad vor. Unter einem Absorberpad wird ein zugeschnittenes und an den Rändern verschweißtes Verbundmaterial verstanden. Dadurch kann das Herausquellen der superabsorbierenden Partikel vermieden werden. Ein weiterer Gegenstand der vorliegenden Erfindung umfasst ein Absorberpad, das ein Verbundmaterial, gemäß einer oder mehrerer der beschriebenen Ausführungsformen enthält.

Ein weiteres bevorzugtes Absorberpad ist ein zugeschnittenes und an den Rändern mit einer Naht verbundenes Verbundmaterial.

Das Absorberpad kann die verschiedensten symmetrischen und/oder unsymmetrischen geometrischen Formen haben.

Das Absorberpad kann ein thermisch am Rand verschweißtes Verbundmaterial, umfassend eine nicht wasserlösliche Verteilungslage und eine Trägerlage aufweisen, wobei die nicht wasserlösliche Verteilungslage und die Trägerlage thermisch am Rand unter teilweiser Durchdringung der Flüssigkeitsaufnahmelage aufgeschmolzen wurden und hierdurch die Lagen am Rand thermisch miteinander verbunden haben.

In einer weiteren Ausführungsfom weist das Absorberpad zwei Verbundmaterialien auf, die wie oben beschrieben, jeweils eine Trägerlage und eine auf der Trägerlage fixierte Flüssigkeitsaufnahmelage aufweisen, wobei die Flüssigkeitsaufnahmelage fixierte superabsorbierende Partikel enthält, und wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt. In dieser Ausführungsform weist eine erste Verteilungslage, die einem ersten Verbundmaterial zugeordnet ist, eine wasserlösliche Verteilungslage und eine wasserunlösliche Verteilungslage und eine zweite Verteilungslage, die einem zweiten Verbundmaterial zugeordnet ist, eine wasserlösliche Verteilungslage auf. Dabei sind die beiden Verbundmaterialien so angeordnet, dass die Flüssigkeitsaufnahmelagen einander zugewandt sind. Das Absorberpad ist umlaufend thermisch am Rand verschweißt, wobei mindestens eine wasserunlösliche Verteilungslage zumindest teilweise aufgeschmolzen worden ist, dabei die Flüssigkeitsaufnahmelagen teilweise durchdrungen hat und hierdurch eine Fixierung des Absorberpads bewirkt hat. Vorzugsweise liegt in dieser Ausführungsform auch mindestens eine Trägerlage zumindest teilweise aufgeschmolzen vor und unterstützt die Fixierung des Absorberpads.

In einer weiteren Ausführungsfom weist das Absorberpad zwei Verbundmaterialien auf, die wie oben beschrieben, jeweils eine Trägerlage und eine auf der Trägerlage fixierte Flüssigkeitsaufnahmelage aufweisen, wobei die Flüssigkeitsaufnahmelage fixierte superabsorbierende Partikel enthält, und wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt. Dabei sind die beiden Verbundmaterialien so angeordnet, dass die Flüssigkeitsaufnahmelagen einander zugewandt sind. Das Absorberpad ist umlaufend thermisch am Rand verschweißt, wobei mindestens eine Trägerlage zumindest teilweise aufgeschmolzen worden ist, dabei die Flüssigkeitsaufnahmelagen teilweise durchdrungen hat und hierdurch eine Fixierung des Absorberpads bewirkt hat. Vorzugsweise liegt in dieser Ausführungsform auch mindestens eine wasserunlösliche Verteilungslage zumindest teilweise aufgeschmolzen vor und unterstützt die Fixierung des Absorberpads.

In einer weiteren Ausführungsfom weist das Absorberpad zwei Verbundmaterialien auf, die wie oben beschrieben, jeweils eine Trägerlage und eine auf der Trägerlage fixierte Flüssigkeitsaufnahmelage aufweisen, wobei die Flüssigkeitsaufnahmelage fixierte superabsorbierende Partikel enthält, und wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt. In dieser Ausführungsform weist eine erste Verteilungslage, die einem ersten Verbundmaterial zugeordnet ist, eine wasserlösliche Verteilungslage und eine wasserunlösliche Verteilungslage und eine zweite Verteilungslage, die einem zweiten Verbundmaterial zugeordnet ist, eine wasserlösliche Verteilungslage auf. Dabei sind die beiden Verbundmaterialien so angeordnet, dass die Flüssigkeitsaufnahmelagen einander zugewandt sind. Zwischen diese Flüssigkeitsaufnahmelagen ist ein thermoplastischer Kleber, vorzugweise (Co-) Polyester, (Co-)Polyamid, Polyurethan und/oder Polyolefin, insbesondere in Form einer zweidimensionalen Flächenware wie Vlies, Film, Gewebe und/oder Gewirke, angeordnet. Das Absorberpad ist umlaufend thermisch am Rand verschweißt, wobei der thermoplastischer Kleber zumindest teilweise aufgeschmolzen worden ist, dabei die Flüssigkeitsaufnahmelagen teilweise durchdrungen hat und hierdurch eine Fixierung des Absorberpads bewirkt hat.Vorzugsweise liegt in dieser Ausführungsform auch mindestens eine Trägerlage zumindest teilweise aufgeschmolzen vor und unterstützt die Fixierung des Absorberpads.

Ebenfalls denkbar ist, dass das Absorberpad ein Verbundmaterial umfassend eine nicht wasserlösliche aufschmelzbare Verteilungslage und eine aufschmelzbare Trägerlage enthält. Hier ragen die Flüssigkeitsverteilungslage und die Trägerlage über die Flüssigkeitsaufnahmelage heraus und liegen unter Einschluss der Flüssigkeitsaufnahmelage miteinander verschweißt vor.

In einer weiteren Ausführungsform der Erfindung weist das Absorberpad einen Absortionskoeffizienten, gemessen nach EN ISO 354:2003 bei einer Frequenz von 6300 Hz von mehr als 0,09 auf noch bevorzugter von mehr als 0,2 und besonders bevorzugt von mehr als 0,25 und/oder bei einer Frequenz von 8000 Hz von mehr als 0,1 noch bevorzugter von mehr als 0,25 und besonders bevorzugt von mehr als 0,3 auf. Dabei weist das Absorberpad vorzugweise mindestens 2 Verbundmaterialien auf, da mit mehrlagigen Produkten in praktischen Versuchen besonders gute akustische Eigenschaften erzielt werden konnten.

In einer weiteren Ausführungsform weist das Absorberpad 2 bis 8 vorzugweise 3 bis 8 und insbesondere 3 bis 7 Verbundmaterialien in einer solchen Anordnung auf, dass die äußeren Lagen durch die Trägerlagen gebildet werden. Das Absorberpad kann zumindest teilweise umlaufend thermisch am Rand verschweißt sein. Die Verschweißung ermöglicht ein zumindest partielles Aufschmelzen der Trägerlage, wodurch die Flüssigkeitsaufnahmelagen teilweise durchdrungen werden kann und hierdurch alle Lagen thermisch miteinander verbunden werden können.

Eine weitere Ausführungsform umfasst ein Absorberpad, in dem mindestens eine Trägerlage und mindestens eine Flüssigkeitsverteilungslage und/oder mindestens 2 Trägerlagen durch mindestens eine Naht zumindest teilweise an den Rändern miteinander verbunden sind.

Eine weitere Ausführungsform umfasst ein Absorberpad, in dem mindestens ein Verbundmaterial in einem wasserdurchlässigen Beutel vorliegt, der an seinen Rändern zumindest teilweise durch mindestens eine Naht verschlossen ist.

Die mindestens eine Naht kann als Flossennaht oder als Überlappungsnaht ausgebildet sein. Wird der Beutel durch mehrere Nähte verschlossen, können diese unabhängig voneinander als Flossennaht oder als Überlappungsnaht ausgebildet sein.

Die Form des Beutels kann variieren. Als geeignet haben sich übliche Verpackungsgestaltungen erwiesen. So kann der Beutel beispielsweise dadurch erhalten werden, dass zwei Beutellagen umlaufend durch Nähte miteinander verbunden werden. Hierdurch werden in der Regel 1 bis 4, vorzugsweise 4 Nähte erhalten. Alternativ kann der Beutel dadurch erhalten werden, dass eine Beutellage zu einem Schlauch gefaltet und an den offenen Rändern durch Nähte verbunden wird. Hierdurch werden in der Regel 3 Nähte erhalten.

In einer bevorzugten Ausführungsform ist die mindestens eine Naht als Schweißnaht, insbesondere als thermisch und/oder ultraschall verschweißte Naht, Klebenaht und/oder vernadelte Naht ausgeführt. Vorteilhaft an verschweißten Nähten ist, dass diese besonders schnell und einfach realisiert werden können.

Die mindestens eine Naht kann durchgehend und/oder diskontinuierlich sein. Diskontinuierliche Nähte setzen sich aus unmittelbaren Nahtflächen, d.h. denjenigen Bereichen der Naht, die zur Bindung der beiden Lagen und/oder zum Verschließen des Beutels dienen, und mittelbaren Nahtflächen, d.h. denjenigen Bereichen der Naht, die zwischen den unmittelbaren Nahtflächen liegen zusammen. Bei Schweißnähten sind die unmittelbaren Nahtflächen die verschweißten Bereiche, bei vernähten Nähten die durch den Faden bedeckten Bereiche, bei verklebten Nähten, die durch Klebemittel verbundenen Bereiche. Diskontinuierliche Nähte haben den Vorteil, dass sie einen geringeren Anteil an Nahtfläche haben und damit eine flächenbezogen höhere Festigkeit bieten.

Kontinuierliche Nähte haben den Vorteil, dass die Gefahr eines Austretens der superabsorbierenden Partikel reduziert wird. Die mindestens eine Naht kann ferner als gerade oder gebogene Linie oder Kombinationen hiervon ausgebildet sein. Bei einer diskontinuierlichen Ausgestaltung kann die mindestens eine Naht in Form von linienförmig und/oder regelmäßig angeordneten Punkten und/oder Strichen ausgebildet sein. Wie oben erläutert, sind diejenigen Anteile der Naht, die zur Bindung der Lagen und/oder zum Verschließen des wasserdurchlässigen Beutels dienen, die unmittelbaren Nahtflächen der Naht. Die Breite der mindestens einen Naht beträgt vorzugsweise 0,5 bis 15 mm, noch bevorzugter 0,5 bis 10 mm und besonders bevorzugt 1 bis 6 mm. Weiter bevorzugt beträgt die Nahtfläche, d.h. die Summe an mittelbarer und unmittelbarer Nahtfläche an der Fläche des Absorbermaterials mindestens 0,4 bis 50 Flächen%, bevorzugter 2 bis 40 Flächen% und besonders bevorzugt 4 bis 35 Flächen%. Liegt die Nahtfläche unter 0,4 Flächen% ist die Festigkeit der Naht in der Regel zu gering.

In einer besonderen Ausführungsform ist die mindestens eine Naht als Schweißnaht ausgebildet, die, vorzugsweise in ihrer Mitte, perforiert ist. Hieran ist vorteilhaft, dass auf eine besonders einfache Weise das Absorbermaterial an die Einbausituation angepasst werden kann. So können beispielsweise Aussparungen gezielt durch Herauslösen von Teilbereichen entlang der perforierten Schweißnaht gebildet werden.

Die Form der Schweißnaht kann variieren. In einer bevorzugten Ausführungsform ist der Übergang zwischen der Schweißnaht und den nicht verschweißten Bereichen der Lagen fließend. Mithin nimmt in einer bevorzugten Ausführungsform die Dicke der verschweißten Bereiche der Schweißnaht in Richtung des Randes ab. Entsprechend nimmt die Dichte der verschweißten Bereiche der Schweißnaht in Richtung des Randes zu. Der Übergang zwischen Schweißnaht und Tasche ist vorzugsweise kontinuierlich. Vorteilhaft hieran ist eine höhere Festigkeit der Schweißnaht.

Ein weiterer Gegenstand der Erfindung ist ein aktiv und/oder passiv gekühltes stromführendes System, umfassend ein, bevorzugt als Absorberpad ausgebildetes, Verbundmaterial umfassend eine Trägerlage und eine auf der Trägerlage fixierte Flüssigkeitsaufnahmelage, die superabsorbierende Partikel enthält, wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt.

Kurzbeschreibung der Figuren:
- Figur 1:: Wasserdampfaufnahme eines erfindungsgemäßen Absorberpads
- Figur 2:: Wasserdampfaufnahme eines nicht erfindungsgemäßen Absorberpads
- Figur 3:: Schallabsroptionseigenschaften eines erfindungsgemäßen Absorberpads
- Figur 4:: Schematische Darstellung des Querschnitts einer Naht 5

### Figurenbescheibung:

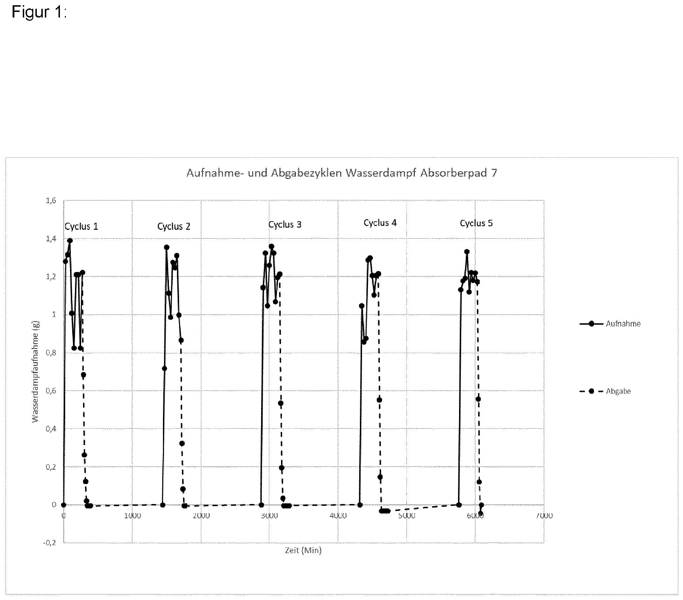

In Figur 1 ist die Wasserdampfaufnahme eines erfindungsgemäßen Absorberpads gezeigt. Es zeigt sich, dass die Wasserdampfaufnahme sehr schnell stattfindet. Die Wasserdampfaufnahme ist nach 30 Minuten bereits im Gleichgewicht. Dazu ist bemerkenswert, dass die Rücktrocknung auch sehr schnell verläuft und nahezu vollständig ist.

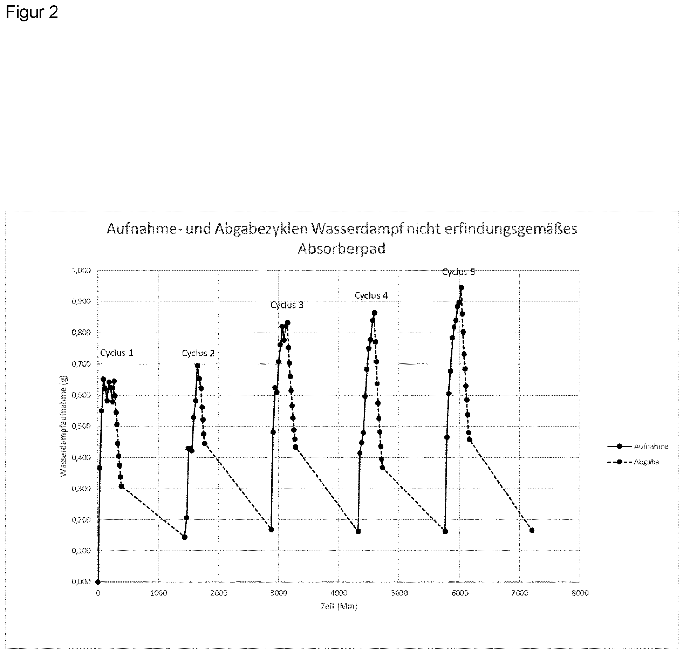

In Figur 2 ist die Wasserdampfaufnahme eines nicht erfindungsgemäßen Absorberpads gezeigt. Es zeigt sich, dass die Wasserdampfaufnahme deutlich langsamer stattfindet. Die Wasserdampfaufnahme ist frühestens nach 90 Minuten im Gleichgewicht. Zudem ist die Rücktrocknung auch nach 20h nicht vollständig erfolgt.

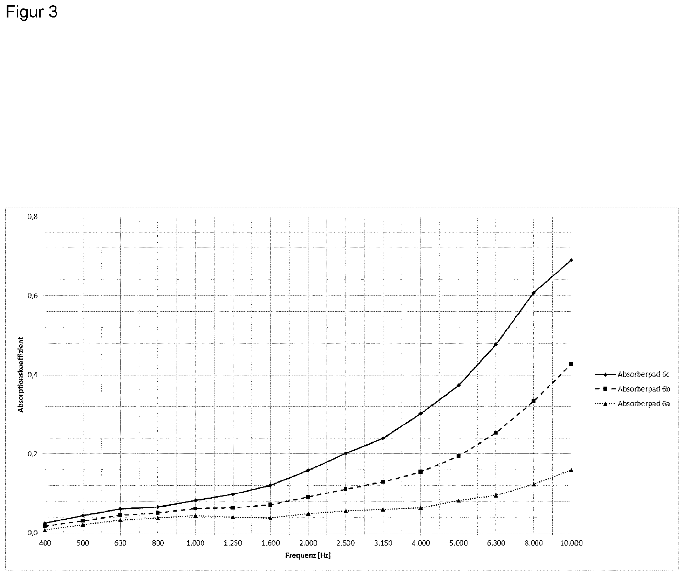

In Figur 3 werden die Schallabsroptionseigenschaften mehrerer erfindungsgemäßer Absorberpads gezeigt. Es zeigt sich, das sämtliche erfindungsgemäße Absorptionspads einen guten Absortionskoeffizienten aufweisen.

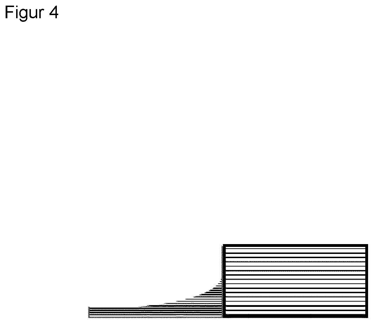

In Figur 4 ist der Querschnitt einer Naht dargestellt. Die Naht liegt in Form einer Schweißnaht vor. Die Dicke der Schweißnaht nimmt in Richtung des Randes ab. Entsprechend nimmt die Dichte der Schweißnaht in Richtung des Randes zu. Dieser Übergang ist kontinuierlich.

Im folgenden wird die Erfindung anhand mehrerer Beispiele näher erläutert:

### Beispiel 1: Herstellung erfindungsgemäß verwendbarer Verbundmaterialien

Es werden verschiedene erfindungsgemäß verwendbare Verbundmaterialien und Absorberpads hergestellt.

Es wurden folgende Materialien verwendet:

| | |
|---|---|
| Mikrofaserspinnvlies: | Polyamid / Polyester Mikrofaserspinnvlies "Evolon ^{®} "; 200 g/m². |
| Superabsorbierende Partikel 1: | teil-neutralisierte und vernetzte Polyacrylsäure, hergestellt im Substanzpolymerisationsverfahren mit einer Partikelgrößenverteilung d₅₀ von 50µm - 1000µm, Auftragsgewicht 15 g/m2. |
| Superabsorbierende Partikel 2: | teil-neutralisierte und vernetzte Polyacrylsäure, hergestellt im inversen Suspensionspolymerisationsverfahren mit einer Partikelgrößenverteilung d₅₀ von 50µm - 1000µm, Auftragsgewicht 15 g/m². |
| Wasserlösliche Verteilungsschicht 1: | Wasserlöslicher teilverseifter Polyvinylalkohol mit einem Auftragsgewicht von 20 g/m² |
| Wasserlösliche Verteilungsschicht 2: | Wasserlösliche Stärke mit einem Auftragsgewicht von 20 g/m² |

Die nachfolgende Tabelle zeigt den verwendeten Lagenaufbau

| Verbund -material | Flüssigkeitsverteilungslage | Flüssigkeitsaufnahmelage | Trägerlage |
|---|---|---|---|
| 1 | - Wasserlösliche Verteilungsschicht 1 1 in Kombination mit | Superabsorbierende Partikel 1 mit PVA auf Trägerlage fixiert | Mikrofaserspinnvlies |
| | - nicht wasserlöslicher Verteilungsschicht Mikrofaserspinnvlies | | |
| 2 | - wasserlösliche Verteilungsschicht 1 in Kombination mit | Superabsorbierende Partikel 2 mit PVA auf Trägerlage fixiert | Themisch gebundener PES |
| | - nicht wasserlöslicher Verteilungsschicht (thermisch gebundener PES Stapelfaservliesstoff, 40 g/m² | | Stapelfaservliesstoff, 40 g/m² |
| 3 | - wasserlösliche Verteilungsschicht 2 in Kombination mit | Superabsorbierende Partikel 1 mit PVA auf Trägerlage fixiert | Binder gebundener PES |
| | - nicht wasserlöslicher Verteilungsschicht (Binder gebundener PES Stapelfaservliesstoff, 40 g/m²) | | Stapelfaservliesstoff, 40 g/m² |
| 4 | - wasserlösliche Verteilungsschicht 1 in Kombination mit | Superabsorbierende Partikel 2 mit PVA auf Trägerlage fixiert | thermisch gebundenes PP Spinnvlies, 60 g/m² |
| | - nicht wasserlöslicher Verteilungsschicht (thermisch. gebundenes PP Spinnvlies, 60 g/m²) | | |
| 5 | - wasserlösliche Verteilungsschicht 1 | Superabsorbierende Partikel 2 mit PVA auf Trägerlage fixiert | Binder gebundener PES |
| | | | Stapelfaservliesstoff, 40 g/m² |

Die Verbindung der Lagen erfolgt wie folgt:
Zunächst wird die Trägerlage vorgelegt und mit der wasserlöslichen Verteilungsschicht und den Superabsorberpartikeln beschichtet. Anschließend wird falls verwendet die wasserunlösliche Verteilungschicht hinzugefügt.

Die Verbundmaterialien 1 bis 5 werden jeweils zwischen 2 thermisch verschweißbare Lagen (Beutellagen, Mikrofaserspinnvlies 80 g/m²) angeordnet, deren Ränder über die Verbundmaterialien umlaufend hinausragen, und die Ränder dieser Lagen zu einem Absorberpad verschweißt. Der Schritt des Zuschneidens kann vor oder nach dem Verschweißen stattfinden.

In einer weiteren Ausführungsform werden mehrere (2 - 5) Verbundmaterialien 1-5 eingeschweißt und Absorberpads erhalten.

In einer weiteren Ausführungsfom werden die Verbundmaterialien 1 - 5 umlaufend thermisch am Rand verschweißt, wobei die nicht wasserlösliche Verteilungslage und die Trägerlage aufschmelzen und dabei die Flüssigkeitsaufnahmelage teilweise durchdringen und hierdurch alle Lagen thermisch miteinander verbinden.

In einer weiteren Ausführungsform werden 2 Verbundmaterialien 5 so angeordnet, dass die Flüssigkeitsaufnahmelagen einander zugewandt sind. Der so erhaltene Verbund wird umlaufend thermisch am Rand verschweißt, wobei die Trägerlage aufschmilzt, dabei die Flüssigkeitsaufnahmelagen teilweise durchdringt und hierdurch alle Lagen thermisch miteinander verbindet. Der Schritt des Zuschneidens kann vor oder nach dem Verschweißen stattfinden. Hierbei wird Absorberpad 6a erhalten.

In einer weiteren Ausführungsform werden 4 Verbundmaterialien 5 so angeordnet, dass die Trägerlagen die äußeren Lagen bilden. Der so erhaltene Verbund wird umlaufend thermisch am Rand verschweißt, wobei die Trägerlagen aufschmelzen, dabei die Flüssigkeitsaufnahmelagen teilweise durchdringen und hierdurch alle Lagen thermisch miteinander verbinden. Der Schritt des Zuschneidens kann vor oder nach dem Verschweißen stattfinden. Hierbei wird Absorberpad 6b erhalten.

In einer weiteren Ausführungsform werden 6 Verbundmaterialien 5 so angeordnet, dass die Trägerlagen die äußeren Lagen bilden. Der so erhaltene Verbund wird umlaufend thermisch am Rand verschweißt, wobei die Trägerlagen aufschmelzen, dabei die Flüssigkeitsaufnahmelagen teilweise durchdringen und hierdurch alle Lagen thermisch miteinander verbinden. Der Schritt des Zuschneidens kann vor oder nach dem Verschweißen stattfinden. Hierbei wird Absorberpad 6c erhalten.

In einer weiteren Ausführungsfom werden 2 Verbundmaterialien 5 so angeordnet, dass die Flüssigkeitsaufnahmelagen einander zugewandt sind. Zwischen diese Flüssigkeitsaufnahmelagen wird ein Klebevlies (Copolyestervlies, 30 g/m², Smp. 100-110°C) angeordnet. Der so erhaltene Verbund wird umlaufend thermisch am Rand verschweißt, wobei das Klebevlies aufschmilzt und dabei die Flüssigkeitsaufnahmelagen teilweise durchdringt und hierdurch alle Lagen thermisch miteinander verbindet. Hierbei wird Absorberpad 7 erhalten.

### Beispiel 2: Prüfung der Absorptionskapazität eines erfindungsgemäßen Absorberpads.

Es wurde die Absorptionskapazität des Absorberpads 7 nach DIN 53923 mit voll entsalztem Wasser geprüft. Es wurde gefunden, dass das Absorberpad 7 eine gute Wasseraufnahme von 8,7 kg/m² hat. Im Rahmen der Prüfung nach DIN 53923 wird das Absorberpad 7 im ausgequollenen Zustand 30 Sek. freischwebend aufgehängt. Hier beträgt der Wasserverlust 550 g/m² und entspricht damit einer sehr guten Retention. Das Absorberpad konnte außerdem ohne Erhitzen einfach getrocknet werden, was zeigt, dass es ferner in der Lage ist Wasser reversibel zu binden. Durch die umlaufende Verschweißung konnte die Quellung gut kontrolliert werden und ein blocking Effekt konnte durch die Verwendung von Verteilerlagen vermieden werden. Durch die Fixierung der superabsorbierenden Partikel konnte die Staubbildung vermieden werden.

### Beispiel 3: Prüfung der Wasserdampfaufnahme eines erfindungsgemäßen Absorberpads

Es wurde die Wasserdampfaufnahme des Absorberpads 7 geprüft. Hierzu wurde das Absorberpad in einem Klimaschrank für einen Zeitraum von 270 Min. bei 90% Luftfeuchte und 30°C gelagert. Die Gewichtszunahme wurde gravimetrisch alle 30 Minuten über einen Zeitraum von 270 Min bestimmt. Anschließend wurde das Absorberpad 7 bei Raumtemperatur getrocknet und die Gewichtsabnahme gravimetrisch bestimmt. Dieser Vorgang wurde 5 Mal wiederholt und ist in Figur 1 dargestellt.

Es zeigt sich, dass die Wasserdampfaufnahme sehr schnell stattfindet. Die Wasserdampfaufnahme ist nach 30 Minuten bereits im Gleichgewicht. Dazu ist bemerkenswert, dass die Rücktrocknung auch sehr schnell verläuft und nahezu vollständig ist.

### Beispiel 4: Prüfung der Wasserdampfaufnahme eines nicht erfindungsgemäßen Absorberpads

Es wurde die Wasserdampfaufnahme eines nicht erfindungsgemäßen Absorberpads geprüft. Das Absorberpad besteht aus einem Vliesstoffbeutel, der mit 1g losen Superabsorberpartikeln 2 gefüllt ist. Die Gewichtszunahme wurde gravimetrisch alle 30 Minuten über einen Zeitraum von 270 Min bestimmt. Anschließend wurde das nicht erfindungsgemäße Absorberpad bei Raumtemperatur für 20h getrocknet und die Gewichtsabnahme gravimetrisch bestimmt. Dieser Vorgang wurde 5 Mal wiederholt und ist in Figur 2 dargestellt. Es zeigt sich, dass die Wasserdampfaufnahme deutlich langsamer stattfindet. Die Wasserdampfaufnahme ist frühestens nach 90 Minuten im Gleichgewicht. Zudem ist die Rücktrocknung auch nach 20 h nicht nicht vollständig erfolgt.

### Beispiel 5: Prüfung der Schallabsroptionseigenschaften eines erfindungsgemäßen Absorberpads.

Die Schallabsorptionseigenschaften von 3 verschiedenen Absorberpads 6a, 6b, 6c wurden nach EN ISO 354:2003 bestimmt. Die Ergebnisse sind in Figur 3 dargestellt. Es zeigt sich, das sämtliche erfindungsgemäße Absorptionspads einen guten Absortionskoeffizient aufweisen.

## Patentansprüche

1. Verwendung eines Verbundmaterials, umfassend eine Trägerlage und eine auf der Trägerlage fixierte Flüssigkeitsaufnahmelage, wobei die Flüssigkeitsaufnahmelage fixierte superabsorbierende Partikel enthält, wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt, zur Aufnahme und Verteilung von Flüssigkeiten in aktiv und/oder passiv gekühlten stromführenden Systemen, insbesondere in aktiv und/oder passiv gekühlten Stromspeichersystemen.

2. Verwendung nach Anspruch 1 in aktiv und/oder passiv gekühlten Batteriesystemen, Inverter-, Leistungselektronik-Systemen und/oder Ladestationen.

3. Verwendung nach Anspruch 1 oder 2 in mit Wasser-Glycol Gemischen aktiv und/oder passiv gekühlten stromführenden Systemen, insbesondere in mit Wasser-Glycol Gemischen aktiv und/oder passiv gekühlten Stromspeichersystemen.

4. Verwendung nach einem oder mehreren der vorangehenden Ansprüche, **dadurch gekennzeichnet, dass** die superabsorbierenden Partikel auf der Trägerlage mit einem Bindemittel, insbesondere mit einem wasserlöslichen Bindemittel, wie zum Beispiel Polyvinylalkohol, Stärke, Polyvinylpyrolidon, Caseinleim, Polyvinylbutyral und/oder mit einem wasserquellbaren Bindemittel, wie zum Beispiel zumindest teilweise vernetztem Polyvinylalkohol und/oder teilweise vernetzter Stärke fixiert sind.

5. Verwendung nach einem oder mehreren der vorangehenden Ansprüche, **dadurch gekennzeichnet, dass** die superabsorbierenden Partikel ein Quellverzögerungsmittel, vorzugsweise ein Quellverzögerungsmittel, das aus den gleichen Materialien wie das wasserlösliche und/oder quellbare Bindemittel besteht, aufweisen.

6. Verwendung nach einem oder mehreren der vorangehenden Ansprüche, **dadurch gekennzeichnet, dass** die Flüssigkeitsverteilungslage einen Vliesstoff, ein Gewebe, ein Gewirke und/oder einen offenporigen Schaum aufweist.

7. Verwendung nach einem oder mehreren der vorangehenden Ansprüche, **dadurch gekennzeichnet, dass** die Oberflächenenergie der Flüssigkeitsverteilungslage gemessen nach DIN 55660 mindestens größer als 30 mN/m, vorzugsweise größer als 35 mN/m und besonders bevorzugt größer als 40 mN/m ist.

8. Verwendung nach einem oder mehreren der vorangehenden Ansprüche, **dadurch gekennzeichnet, dass** die Flüssigkeitsverteilungslage mindestens zwei Verteilungsschichten umfasst, wobei mindestens eine Verteilungsschicht wasserlöslich ist und mindestens eine andere Verteilungsschicht nicht wasserlöslich ist, wobei die wasserlösliche Verteilungsschicht vorzugsweise aus den gleichen Materialien wie das wasserlösliche und/oder quellbare Bindemittel besteht.

9. Verwendung nach einem oder mehreren der vorangehenden Ansprüche, **dadurch gekennzeichnet, dass** die Trägerlage thermoplastische Polymere, bevorzugt mit einem Schmelzpunkt von unter 270°C enthält.

10. Verwendung nach einem oder mehreren der vorangehenden Ansprüche, **dadurch gekennzeichnet, dass** die Trägerlage und die Flüssigkeitsverteilungslage miteinander verschweißt und/oder verschweißbar sind.

11. Absorberpad, umfassend ein zugeschnittenes und an den Rändern verschweisstes Verbundmaterial, das eine Trägerlage und eine auf der Trägerlage fixierte Flüssigkeitsaufnahmelage umfasst, wobei die Flüssigkeitsaufnahmelage fixierte superabsorbierende Partikel enthält, wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche die aufzunehmende Flüssigkeit in der Ebene des Verbundmaterials aufnimmt und verteilt.

12. Absorberpad nach Anspruch 11, **dadurch gekennzeichnet, dass** das Absorberpad ein thermisch am Rand verschweißtes Verbundmaterial, umfassend eine nicht wasserlösliche Verteilungslage und eine Trägerlage aufweist, wobei die nicht wasserlösliche Verteilungslage und die Trägerlage thermisch am Rand unter teilweiser Durchdringung der Flüssigkeitsaufnahmelage aufgeschmolzen wurden und hierdurch alle Lagen am Rand thermisch miteinander verbunden haben.

13. Absorberpad nach Anspruch 11 oder 12, **dadurch gekennzeichnet, dass** das Absorberpad zwei Verbundmaterialien aufweist, wobei eine erste Verteilungslage, die einem ersten Verbundmaterial zugeordnet ist, eine wasserlösliche Verteilungslage und eine wasserunlösliche Verteilungslage und eine zweite Verteilungslage, die einem zweiten Verbundmaterial zugeordnet ist, eine wasserlösliche Verteilungslage aufweist, wobei die beiden Verbundmaterialien so angeordnet sind, dass die Flüssigkeitsaufnahmelagen einander zugewandt sind, wobei das Absorberpad umlaufend thermisch am Rand verschweißt ist, wobei mindestens eine wasserunlösliche Verteilungslage zumindest teilweise aufgeschmolzen worden ist, dabei die Flüssigkeitsaufnahmelagen teilweise durchdrungen und hierdurch eine Fixierung des Absorberpads bewirkt hat.

14. Absorberpad nach einem der Ansprüche 11 bis 13 **dadurch gekennzeichnet, dass** das Absorberpad zwei, wasserlösliche Verteilungslagen aufweisende, Verbundmaterialien umfasst, wobei die beiden Verbundmaterialien so angeordnet sind, dass die Flüssigkeitsaufnahmelagen einander zugewandt sind, wobei zwischen diesen Flüssigkeitsaufnahmelagen ein thermoplastischer Kleber, vorzugweise (Co-) Polyester, (Co-)Polyamid, Polyurethan und/oder Polyolefin, insbesondere in Form einer zweidimensionalen Flächenware wie Vlies, Film, Gewebe und/oder Gewirke, angeordnet ist, wobei das Absorberpad umlaufend thermisch am Rand verschweißt ist, wobei der thermoplastischer Kleber zumindest teilweise aufgeschmolzen worden ist, dabei die Flüssigkeitsaufnahmelagen teilweise durchdrungen und hierdurch eine Fixierung des Absorberpads bewirkt hat.

15. Aktiv und/oder passiv gekühltes stromführendes System, umfassend ein Verbundmaterial, umfassend eine Trägerlage und eine auf der Trägerlage fixierte Flüssigkeitsaufnahmelage, wobei die Flüssigkeitsaufnahmelage fixierte superabsorbierende Partikel enthält, wobei auf der der Trägerlage abgewandten Seite der Flüssigkeitsaufnahmelage eine mit der Flüssigkeitsaufnahmelage in flüssigkeitsleitendem Kontakt stehende Flüssigkeitsverteilungslage angeordnet ist, welche eine aufzunehmende Flüssigkeit in der Ebene des Verbundmaterials aufnimmt und verteilt.

## Claims

1. Use of a composite material, comprising a backing layer and a liquid-absorbing layer fixed on the backing layer, where the liquid-absorbing layer comprises fixed superabsorbent particles, where, on the side of the liquid-absorbing layer facing away from the backing layer, there is a liquid-distributing layer which is in liquid-conducting contact with the liquid-absorbing layer and which absorbs and distributes a liquid for absorption in the plane of the composite material, for absorbing and distributing liquids in actively and/or passively cooled current-carrying systems, more particularly in actively and/or passively cooled current-storage systems.

2. Use according to Claim 1 in actively and/or passively cooled battery systems, inverter and power electronics systems and/or charging stations.

3. Use according to Claim 1 or 2 in current-carrying systems cooled actively and/or passively with water-glycol mixtures, more particular in current-storage systems cooled actively and/or passively with water-glycol mixtures.

4. Use according to one or more of the preceding claims, **characterized in that** the superabsorbent particles are fixed on the backing layer with a binder, more particularly with a water-soluble binder, such as, for example, polyvinyl alcohol, starch, polyvinylpyrrolidone, casein glue, polyvinylbutyral, and/or with a water-swellable binder, such as, for example, at least partly crosslinked polyvinyl alcohol and/or partly crosslinked starch.

5. Use according to one or more of the preceding claims, **characterized in that** the superabsorbent particles comprise a swelling retardant, preferably a swelling retardant which consists of the same materials as the water-soluble and/or swellable binder.

6. Use according to one or more of the preceding claims, **characterized in that** the liquid-distributing layer comprises a nonwoven fabric, a woven fabric, a knitted fabric and/or an open-pore foam.

7. Use according to one or more of the preceding claims, **characterized in that** the surface energy of the liquid-distributing layer, measured according to DIN 55660, is at least greater than 30 mN/m, preferably greater than 35 mN/m and very preferably greater than 40 mN/m.

8. Use according to one or more of the preceding claims, **characterized in that** the liquid-distributing layer comprises at least two distribution laminae, where at least one distribution lamina is water-soluble and at least one other distribution lamina is non-water-soluble, where the water-soluble distribution lamina consists preferably of the same materials as the water-soluble and/or swellable binder.

9. Use according to one or more of the preceding claims, **characterized in that** the backing layer comprises thermoplastic polymers, preferably having a melting point of below 270°C.

10. Use according to one or more of the preceding claims, **characterized in that** the backing layer and the liquid-distributing layer are weldable and/or welded to one another.

11. Absorber pad comprising a composite material which is cut to size, welded at the edges and comprises a backing layer and a liquid-absorbing layer fixed on the backing layer, where the liquid-absorbing layer comprises fixed superabsorbent particles, where, on the side of the liquid-absorbing layer facing away from the backing layer, there is a liquid-distributing layer which is in liquid-conducting contact with the liquid-absorbing layer and which absorbs and distributes the liquid for absorption in the plane of the composite material.

12. Absorber pad according to Claim 11, **characterized in that** the absorber pad comprises a composite material welded thermally at the edge and comprising a non-water-soluble distribution layer and a backing layer, where the non-water-soluble distribution layer and the backing layer have been melted thermally at the edge with partial penetration of the liquid-absorbing layer and as a result have bonded all of the layers to one another thermally at the edge.

13. Absorber pad according to Claim 11 or 12, **characterized in that** the absorber pad comprises two composite materials, where a first distribution layer, which is assigned to a first composite material, comprises a water-soluble distribution layer and a water-insoluble distribution layer, and a second distribution layer, which is assigned to a second composite material, comprises a water-soluble distribution layer, wherein the two composite materials are arranged in such a way that the liquid-absorbing layers are facing one another, where the absorber pad is welded all round thermally at the edge, where at least one water-insoluble distribution layer has been at least partly melted, with partial penetration of the liquid-absorbing layers, and has thereby brought about fixing of the absorber pad.

14. Absorber pad according to any of Claims 11 to 13, **characterized in that** the absorber pad comprises two composite materials comprising water-soluble distribution layers, where the two composite materials are arranged in such a way that the liquid-absorbing layers are facing one another, where between these liquid-absorbing layers there is a thermoplastic adhesive, preferably (co)polyester, (co)polyamide, polyurethane and/or polyolefin, more particularly in the form of a two-dimensional sheet product such as nonwoven, film, woven fabric and/or knitted fabric, where the absorber pad is welded all round thermally at the edge, where the thermoplastic adhesive has been at least partly melted, with partial penetration of the liquid-absorbing layers, and has thereby brought about fixing of the absorber pad.

15. Actively and/or passively cooled current-carrying system, comprising a composite material, comprising a backing layer and a liquid-absorbing layer fixed on the backing layer, where the liquid-absorbing layer comprises fixed superabsorbent particles, where, on the side of the liquid-absorbing layer facing away from the backing layer, there is a liquid-distributing layer which is in liquid-conducting contact with the liquid-absorbing layer and which absorbs and distributes a liquid for absorption in the plane of the composite material.

## Revendications

1. Utilisation d'un matériau composite, comprenant une couche de support et une couche de réception de liquide fixée sur la couche de support, la couche de réception de liquide contenant des particules superabsorbantes fixées, une couche de distribution de liquide en contact de conduction de liquide avec la couche de réception de liquide étant agencée sur le côté de la couche de réception de liquide détourné de la couche de support, laquelle reçoit et distribue un liquide à recevoir dans le plan du matériau composite, pour la réception et la distribution de liquides dans des systèmes de transport d'électricité refroidis activement et/ou passivement, notamment dans des systèmes de stockage d'électricité refroidis activement et/ou passivement.

2. Utilisation selon la revendication 1 dans des systèmes de batteries, des systèmes d'onduleurs, d'électronique de puissance et/ou des stations de charge refroidis activement et/ou passivement.

3. Utilisation selon la revendication 1 ou 2 dans des systèmes de transport d'électricité refroidis activement et/ou passivement par des mélanges eau-glycol, notamment dans des systèmes de stockage d'électricité refroidis activement et/ou passivement par des mélanges eau-glycol.

4. Utilisation selon une ou plusieurs des revendications précédentes, **caractérisée en ce que** les particules superabsorbantes sont fixées sur la couche de support avec un liant, notamment avec un liant hydrosoluble, tel que par exemple l'alcool polyvinylique, l'amidon, la polyvinylpyrrolidone, la colle de caséine, le polyvinylbutyral et/ou avec un liant gonflable à l'eau, tel que par exemple l'alcool polyvinylique au moins partiellement réticulé et/ou l'amidon partiellement réticulé.

5. Utilisation selon une ou plusieurs des revendications précédentes, **caractérisée en ce que** les particules superabsorbantes présentent un agent retardateur de gonflement, de préférence un agent retardateur de gonflement constitué des mêmes matériaux que le liant hydrosoluble et/ou gonflable.

6. Utilisation selon une ou plusieurs des revendications précédentes, **caractérisée en ce que** la couche de distribution de liquide présente un non-tissé, un tissu, un tricot et/ou une mousse à pores ouverts.

7. Utilisation selon une ou plusieurs des revendications précédentes, **caractérisée en ce que** l'énergie de surface de la couche de distribution de liquide, mesurée selon la norme DIN 55660, est au moins supérieure à 30 mN/m, de préférence supérieure à 35 mN/m, et de manière particulièrement préférée supérieure à 40 mN/m.

8. Utilisation selon une ou plusieurs des revendications précédentes, **caractérisée en ce que** la couche de distribution de liquide comprend au moins deux couches de distribution, au moins une couche de distribution étant hydrosoluble et au moins une autre couche de distribution n'étant pas hydrosoluble, la couche de distribution hydrosoluble étant de préférence constituée des mêmes matériaux que le liant hydrosoluble et/ou gonflable.

9. Utilisation selon une ou plusieurs des revendications précédentes, **caractérisée en ce que** la couche de support contient des polymères thermoplastiques, de préférence avec un point de fusion inférieur à 270 °C.

10. Utilisation selon une ou plusieurs des revendications précédentes, **caractérisée en ce que** la couche de support et la couche de distribution de liquide sont soudées et/ou peuvent être soudées entre elles.

11. Tampon absorbant, comprenant un matériau composite découpé et soudé sur les bords, qui comprend une couche de support et une couche de réception de liquide fixée sur la couche de support, la couche de réception de liquide contenant des particules superabsorbantes fixées, une couche de distribution de liquide en contact de conduction de liquide avec la couche de réception de liquide étant agencée sur le côté de la couche de réception de liquide détourné de la couche de support, laquelle reçoit et distribue le liquide à recevoir dans le plan du matériau composite.

12. Tampon absorbant selon la revendication 11, **caractérisé en ce que** le tampon absorbant présente un matériau composite soudé thermiquement sur le bord, comprenant une couche de distribution non hydrosoluble et une couche de support, la couche de distribution non hydrosoluble et la couche de support ayant été fondues thermiquement sur le bord en pénétrant partiellement dans la couche de réception de liquide et liant ainsi thermiquement entre elles toutes les couches sur le bord.

13. Tampon absorbant selon la revendication 11 ou 12, **caractérisé en ce que** le tampon absorbant présente deux matériaux composites, une première couche de distribution associée à un premier matériau composite comprenant une couche de distribution hydrosoluble et une couche de distribution non hydrosoluble, et une deuxième couche de distribution associée à un deuxième matériau composite comprenant une couche de distribution hydrosoluble, les deux matériaux composites étant agencés de telle sorte que les couches de réception de liquide sont tournées l'une vers l'autre, le tampon absorbant étant soudé thermiquement sur le bord tout autour, au moins une couche de distribution non hydrosoluble ayant été au moins partiellement fondue, traversant ainsi partiellement les couches de réception de liquide et provoquant ainsi une fixation du tampon absorbant.

14. Tampon absorbant selon l'une quelconque des revendications 11 à 13, **caractérisé en ce que** le tampon absorbant comprend deux matériaux composites présentant des couches de distribution hydrosolubles, les deux matériaux composites étant agencés de telle sorte que les couches de réception de liquide sont tournées l'une vers l'autre, un adhésif thermoplastique, de préférence un (co)polyester, un (co)polyamide, un polyuréthane et/ou une polyoléfine, étant agencé entre ces couches de réception de liquide, notamment sous la forme d'un produit plat bidimensionnel tel qu'un non-tissé, un film, un tissu et/ou un tricot, le tampon absorbant étant soudé thermiquement sur le bord tout autour, l'adhésif thermoplastique ayant été au moins partiellement fondu, traversant ainsi partiellement les couches de réception de liquide et provoquant ainsi une fixation du tampon absorbant.

15. Système de transport d'électricité refroidi activement et/ou passivement, comprenant un matériau composite comprenant une couche de support et une couche de réception de liquide fixée sur la couche de support, la couche de réception de liquide contenant des particules superabsorbantes fixées, une couche de distribution de liquide en contact de conduction de liquide avec la couche de réception de liquide étant agencée sur le côté de la couche de réception de liquide détourné de la couche de support, laquelle reçoit et distribue un liquide à recevoir dans le plan du matériau composite.
